# EUROPEAN PATENT APPLICATION

(11) **EP 4 434 948 A1**
(43) Date of publication of application: **25.09.2024**
(21) Application number: 22895459.0
(22) Date of filing: 07.11.2022
(51) Int. Cl.: C03C 10/04, C03C 3/097, C03C 21/00

(54) **CRYSTALLISED GLASS**

(30) Priority: 19.11.2021 JP 2021188398; 21.01.2022 JP 2022007546; 22.08.2022 JP 2022131986
(71) Applicant: Nippon Electric Glass Co., Ltd., Otsu-shi, Shiga 520-8639 (JP)
(72) Inventor: Ichimaru Tomonori, Otsu-shi Shiga 520-8639 (JP); Yuki Ken, Otsu-shi Shiga 520-8639 (JP)
(74) Representative: Hoffmann Eitle
(86) International application number: PCT/JP2022/041284
(87) International publication number: WO 2023/090177

(57) **Abstract**

To provide a crystallized glass having high strength, a high transmittance, and high impact resistance. A crystallized glass according to the present invention includes a compression stress layer formed by ion exchange, in which the crystallized glass contains, as a composition, in mol%, from 50% to 80% of SiO₂, from 0% to 4.8% of Al₂O₃, from 0.2% to 15% of P₂O₅, from 1.5% to 30% of Li₂O, from 0% to 15% of Na₂O, and from 1.5% to 10% of ZrO₂, and the crystallized glass has a portion in which a Na ion concentration decreases from a surface side to an inner side of the glass.

## Description

### TECHNICAL FIELD

The present invention relates to a crystallized glass, and particularly to a crystallized glass suitable for a cover glass for a mobile phone, a digital camera, PDA (personal digital assistant), and a touch panel display.

### BACKGROUND ART

Devices such as a mobile phone (particularly a smartphone), a digital camera, PDA, a touch panel display, a large television, and a non-contact power supply are becoming increasingly popular. A chemically tempered glass subjected to an ion exchange treatment is used for these applications. In recent years, the chemically tempered glass has been increasingly used for exterior parts of digital signage, a mouse, a smartphone or the like.

### CITATION LIST

### PATENT LITERATURE

Patent Literature 1: WO2013/088856
Patent Literature 2: WO2019/230889

### SUMMARY OF INVENTION

### TECHNICAL PROBLEM

Cover glasses, particularly cover glasses used in smartphones, are often used while being moved and are therefore susceptible to breakage when dropped on a road surface. Therefore, in the application as a cover glass, it is important to enhance strength against falling on the road surface.

The chemically tempered glass has high strength. This is because the presence of a compression stress layer on the surface prevents formation and progress of cracks on the surface. It is considered that the strength of the tempered glass can be improved by adjusting a stress state of the compression stress layer (for example, see Patent Literature 1).

A crystallized glass is a product in which crystals are precipitated in the glass, that is, it contains crystals inside the glass, and is known for high strength thereof. Patent Literature 2 discloses a chemically tempered crystallized glass, but a transmittance thereof is low, and when the chemically tempered crystallized glass is used as a cover glass, visibility of a display decreases. There is also room for improvement in impact resistance.

An object of the present invention is to provide a crystallized glass having high strength, a high transmittance, and high impact resistance.

### SOLUTION TO PROBLEM

As a result of conducting various studies, the inventors of the present invention have found that the above technical problem can be solved by strictly regulating the composition, and proposes the finding as the present invention. That is, a first aspect of the present invention relates to a crystallized glass including a compression stress layer formed by ion exchange, in which the crystallized glass contains, as a composition, in mol%, from 50% to 80% of SiO₂, from 0% to 4.8% of Al₂O₃, from 0.2% to 15% of P₂O₅, from 1.5% to 30% of Li₂O, from 0% to 15% of Na₂O, and from 1.5% to 10% of ZrO₂, and the crystallized glass has a portion in which a Na ion concentration decreases from a surface side to an inner side of the glass. Here, the "Na ion concentration" can be confirmed by, for example, measuring a cross section of a sample with SEM-EDX. Accordingly, a crystallized glass having a high transmittance and high impact resistance can be obtained.

In addition, it is preferable that a crystallized glass according to a second aspect of the present invention is based on the first aspect and has a sheet shape, and a stress depth of the compression stress layer is 13% or more of a sheet thickness in the glass. Accordingly, resistance to crack penetration is increased and high impact resistance is easily obtained.

In addition, it is preferable that a crystallized glass according to a third aspect of the present invention is based on the first or second aspect, and at least one of lithium disilicate and lithium metasilicate is precipitated in the glass. Accordingly, a high transmittance is easily obtained.

In addition, it is preferable that a crystallized glass according to a fourth aspect of the present invention is based on any one of the first to third aspects, and a full width at half maximum FWHM at a maximum peak in an X-ray diffraction spectrum is 0.120° or more in the glass. Accordingly, a high transmittance is easily obtained. Here, the "full width at half maximum FWHM at a maximum peak in an X-ray diffraction spectrum" can be evaluated using an X-ray diffraction apparatus (for example, Aeris manufactured by Malvern Panalytical Ltd) using a powder method.

In addition, it is preferable that a crystallized glass according to a fifth aspect of the present invention is based on any one of the first to fourth aspects, and a compression stress value of the compression stress layer is 100 MPa or more in the glass. Accordingly, resistance to crack penetration is increased and high impact resistance is easily obtained.

In addition, it is preferable that a crystallized glass according to a sixth aspect of the present invention is based on any one of the first to fifth aspects, and has a sheet shape and a sheet thickness of 1.5 mm or less. Accordingly, the weight of the crystallized glass can be reduced.

In addition, a crystallized glass according to a seventh aspect of the present invention is a crystallized glass including a compression stress layer formed by ion exchange, in which at least one of lithium disilicate and lithium metasilicate is precipitated, and the crystallized glass has a portion in which a Na ion concentration decreases from a surface side to an inner side of the glass.

In addition, a crystallized glass according to an eighth aspect of the present invention is a crystallized glass including a compression stress layer formed by ion exchange, in which the crystallized glass contains, as a composition, in mol%, from 50% to 80% of SiO₂, from 0% to 4.8% of Al₂O₃, from 0.2% to 15% of P₂O₅, from 1.5% to 30% of Li₂O, from 0% to less than 3.8% of Na₂O+K₂O (total amount of Na₂O and K₂O), from 0% to less than 3.8% of Na₂O, from 0% to less than 3.8% of K₂O, and from 1.5% to 10% of ZrO₂. Accordingly, all of a high level of strength, transmittance, and impact resistance can be achieved.

In addition, a crystalline glass according to a ninth aspect of the present invention contains, as a glass composition, in mol%, from 50% to 80% of SiO₂, from 0% to 4.8% of Al₂O₃, from 0.2% to 15% of P₂O₅, from 1.5% to 30% of Li₂O, from 0% to less than 3.8% of Na₂O+K₂O, from 0% to less than 3.8% of Na₂O, from 0% to less than 3.8% of K₂O, and from 1.5% to 10% of ZrO₂.

In addition, a crystalline glass according to a tenth aspect of the present invention contains, as a glass composition, in mol%, from 50% to 80% of SiO₂, from 0% to 4.8% of Al₂O₃, from 0.2% to 15% of P₂O₅, from 1.5% to 30% of Li₂O, from 0% to 15% of Na₂O, and from 1.5% to 10% of ZrO₂.

### BRIEF DESCRIPTION OF DRAWING

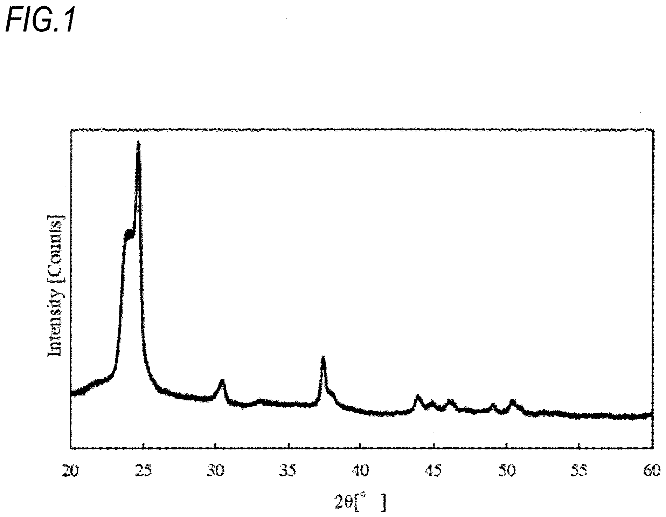

Fig. 1 is a diagram showing an X-ray diffraction spectrum of a crystallized glass of Example 52 in Table 12.

### DESCRIPTION OF EMBODIMENTS

A crystallized glass (crystalline glass) according to the present invention contains, as a composition, in mol%, from 50% to 80% of SiO₂, from 0% to 4.8% of Al₂O₃, from 0.2% to 15% of P₂O₅, from 1.5% to 30% of Li₂O, from 0% to 15% of Na₂O, and from 1.5% to 10% of ZrO₂. The reason for limiting the content of each component as described above is as follows. Note that in the description of the content of each component, % represents mol% unless otherwise indicated. In the present description, a numerical range indicated using "to" means a range that includes the numerical values listed before and after "to" as the minimum value and the maximum value, respectively.

SiO₂ is a component that forms a glass network, and is also a component for precipitating crystals such as lithium disilicate and lithium metasilicate. A content of SiO₂ is preferably from 50% to 80%, from 55% to 75%, from 60% to 73%, from 60% to 70%, and particularly from 65% to 70%. When the content of SiO₂ is too low, vitrification is difficult, the Young's modulus and weather resistance tend to decrease, and lithium disilicate and lithium metasilicate are difficult to precipitate. On the other hand, when the content of SiO₂ is too high, meltability and formability tend to decrease, a thermal expansion coefficient becomes too low, it is difficult to match the thermal expansion coefficient of a surrounding material, and the transmittance tends to decrease due to the precipitation of foreign crystals (unintended crystals).

Al₂O₃ is a component that adjusts precipitated crystals and a compression stress. An upper limit range for Al₂O₃ is preferably 4.8% or less, 4.7% or less, 4.5% or less, 4.4% or less, 4.3% or less, 4.2% or less, 4.0% or less, 3.8% or less, 3.5% or less, 3.3% or less, 3.0% or less, 2.8% or less, 2.5% or less, 2.2% or less, 2.1% or less, and particularly 2.0% or less. When the content of the Al₂O₃ is too high, there is a concern that a compression stress value of the crystallized glass decreases. On the other hand, when the content of Al₂O₃ is too low, there is a concern that the transmittance and devitrification resistance tend to decrease. Therefore, a lower limit range of the content of Al₂O₃ is preferably 0% or more, 0.1% or more, 0.2% or more, 0.3% or more, 0.4% or more, 0.5% or more, 0.7% or more, 1.0% or more, and particularly 1.5% or more.

P₂O₅ is a component for generating a crystal nucleus. However, when a large amount of P₂O₅ is introduced, the glass tends to undergo phase separation. Therefore, the content of P₂O₅ is preferably from 0.2% to 15%, from 0.2% to 10%, from 0.2% to 8%, from 0.2% to 5%, from 0.2% to 3%, and particularly from 0.5% to 3%.

Li₂O is a component for precipitating crystals such as lithium disilicate and lithium metasilicate, and is also a component that enhances ion exchange performance. However, when the content of Li₂O is too high, the weather resistance tends to decrease. Therefore, an upper limit range for Li₂O is preferably 30% or less, 29% or less, 28% or less, 26% or less, and particularly 25% or less, and a lower limit range therefor is preferably 1.5% or more, 2% or more, 3% or more, 4% or more, 4.5% or more, 5% or more, 5.5% or more, 6% or more, 6.3% or more, 6.5% or more, 6.6% or more, 8% or more, 10% or more, 12% or more, 15% or more, 18% or more, 20% or more, 21% or more, 22% or more, 22.5% or more, 23% or more, 23.5% or more, 24% or more, and particularly 24.5% or more.

Na₂O is a component that decreases a viscosity in high temperature and that remarkably enhances the meltability. It is also a component that contributes to initial melting of a glass raw material. However, when the content of Na₂O is too high, the crystallite size tends to be coarse and the weather resistance tends to decrease. Therefore, an upper limit range for N₂O is preferably 15% or less, 12% or less, 10% or less, 9.8% or less, 9.5% or less, 9.3% or less, 9.1% or less, 9% or less, 8.7% or less, particularly 7% or less, 6% or less, 5% or less, 4% or less, 3% or less, less than 2.4%, 2.2% or less, 2% or less, 1.8% or less, 1.5% or less, and is 1% or less, and particularly less than 1% when the weather resistance is important. A lower limit range therefor is preferably 0% or more, 0.1% or more, 0.3% or more, 0.5% or more, 0.8% or more, 1% or more, and particularly 2% or more.

ZrO₂ is a component for generating a crystal nucleus. However, when a large amount of ZrO₂ is introduced, the glass tends to undergo devitrification, and the introduced raw material is difficult to dissolve. Therefore, there is a concern that unmelted foreign matters may get mixed into the glass. Therefore, an upper limit range for ZrO₂ is preferably 10% or less, 9% or less, 8% or less, 7% or less, 6.5% or less, and particularly 6% or less, and a lower limit range therefor is preferably 1.5% or more, 1.7% or more, 1.9 or more, 2% or more, 2.1% or more, 2.3% or more, 2.5% or more, 2.7% or more, 3% or more, 3.3% or more, 3.5% or more, and particularly 4% or more.

A molar ratio Al₂O₃/SiO₂ is preferably 0.07 or less, 0.06 or less, 0.05 or less, 0.045 or less, 0.043 or less, 0.04 or less, 0.038 or less, 0.035 or less, 0.033 or less, 0.03 or less, 0.028 or less, and particularly from 0 to 0.025. When the molar ratio Al₂O₃/SiO₂ is too large, there is a concern that the vitrification is difficult or the compression stress value of the crystallized glass decreases.

A molar ratio Al₂O₃/Li₂O is preferably 0.2 or less, 0.15 or less, 0.14 or less, 0.13 or less, 0.12 or less, 0.11 or less, 0.1 or less, 0.09 or less, 0.08 or less, 0.07 or less, and particularly from 0 to 0.065. When the molar ratio Al₂O₃/Li₂O is too large, there is a concern that crystals such as lithium disilicate and lithium metasilicate are difficult to precipitate, crystals such as petalite tend to precipitate, or the compression stress value of the crystallized glass decreases.

A molar ratio Al₂O₃/(SiO₂+Li₂O) is preferably 0.06 or less, 0.055 or less, 0.05 or less, 0.047 or less, 0.045 or less, 0.043 or less, 0.04 or less, 0.038 or less, 0.035 or less, 0.033 or less, and particularly from 0 to 0.03. When the molar ratio Al₂O₃/(SiO₂+Li₂O) is too large, there is a concern that crystals such as lithium disilicate and lithium metasilicate are difficult to precipitate, crystals such as petalite tend to precipitate, or the compression stress value of the crystallized glass decreases.

In addition to the above components, other components may be introduced as an optional component.

K₂O is a component that enhances the ion exchange performance, and is also a component decreases the viscosity in high temperature and enhances the meltability. However, when the content of K₂O is too high, the crystallite size tends to be coarse. Therefore, the content of K₂O is preferably from 0% to 7%, from 0% to 5%, from 0% to 3%, from 0% to 2%, from 0% to 1.5%, from 0% to 1.2%, from 0% to less than 1%, and particularly from 0% to 0.8%.

It is preferable that Na₂O+K₂O, which is a total amount of Na₂O and K₂O is from 0% to 8%, from 0% to 7%, from 0% to 5%, from 0% to less than 3.8%, from 0% to 3.5%, from 0% to 3%, from 0% to 2.5%, and particularly from 0% to 2%. When the content of Na₂O+K₂O is too high, the crystallite size tends to be coarse.

A molar ratio (Na₂O+K₂O)/(Li₂O+Na₂O+K₂O) is preferably less than 1.50, 1.40 or less, 1.30 or less, 1.20 or less, 1.10 or less, 1.00 or less, from 0.05 to 0.90, and particularly from 0.10 to 0.80. When the molar ratio (Na₂O+K₂O)/(Li₂O+Na₂O+K₂O) is too large, the ion exchange performance due to a NaNO₃ molten salt decreases, and in the crystallized glass, it is difficult to form a portion where a Na ion concentration decreases from a surface side to an inner side of the glass, that is, a compression stress layer based on Na ions. Note that, the "(Na₂O+K₂O)/(Li₂O+Na₂O+K₂O)" is a value obtained by dividing the total amount of Na₂O and K₂O by the total amount of Li₂O, Na₂O, and K₂O.

B₂O₃ is a component that enhances the meltability and the devitrification resistance. However, when the content of B₂O₃ is too high, the weather resistance tends to decrease. Therefore, the content of B₂O₃ is preferably from 0% to 10%, from 0% to 7%, from 0% to 5%, from 0% to 3%, and particularly from 0% to less than 1%.

MgO is a component that enhances the Young's modulus or the ion exchange performance, that decreases the viscosity in high temperature, and that enhances the meltability. However, when the content of MgO is too high, the glass tends to undergo devitrification during forming. Therefore, the content of MgO is preferably from 0% to 10%, from 0% to 7%, from 0% to 4%, from 0% to 2%, from 0% to 1%, and particularly from 0% to 0.1%.

CaO is a component that decreases the viscosity in high temperature and that enhances the meltability. Since the raw material to be introduced is relatively inexpensive among alkaline earth metal oxides, CaO is a component that reduces a batch cost. However, when the content of CaO is too high, the glass tends to undergo devitrification during forming. Therefore, the content of CaO is preferably from 0% to 5%, from 0% to 3%, from 0% to 1%, and particularly from 0% to 0.5%.

SrO is a component that prevents phase separation and is also a component that prevents coarsening of the crystallite size. When the content thereof is too high, a heat treatment makes it difficult to precipitate crystals. Therefore, the content of SrO is preferably from 0% to 5%, from 0% to 3%, from 0% to 2%, and particularly from 0% to 1%.

BaO is a component that prevents coarsening of the crystallite size. When the content thereof is too high, a heat treatment makes it difficult to precipitate crystals. Therefore, the content of BaO is preferably from 0% to 5%, from 0% to 3%, from 0% to 2%, and particularly from 0% to 1%.

ZnO is a component that decreases the viscosity in high temperature and remarkably enhances the meltability, and is also a component that prevents coarsening of the crystallite size. However, when the content of ZnO is too high, the glass tends to undergo devitrification during forming. Therefore, the content of ZnO is preferably from 0% to 5%, from 0% to 3%, from 0% to 2%, and particularly from 0% to 1%.

TiO₂ is a component for generating a crystal nucleus and is also a component for improving the weather resistance. However, when a large amount of TiO₂ is introduced, the glass is colored and the transmittance tends to decrease. Therefore, the content of TiO₂ is preferably from 0% to 5%, from 0% to 3%, and particularly from 0% to less than 1%.

SnO₂ is a component that enhances the ion exchange performance. When the content thereof is too high, the devitrification resistance tends to decrease. Therefore, the content of SnO₂ is preferably from 0% to 3%, from 0.01% to 3%, from 0.05% to 3%, from 0.1% to 3%, and particularly from 0.2% to 3%.

Depending on the viscosity in high temperature, effective fining agents can be added. As the fining agent, one or two or more selected from the group of Cl, SO₃, CeO₂, and Sb₂O₃ (preferably the group of Cl and SO₃) may be added in an amount of from 0.001% to 1%.

A suitable content of Fe₂O₃ is less than 1000 ppm (less than 0.1 mass%), less than 800 ppm, less than 600 ppm, less than 400 ppm, and particularly less than 300 ppm. Further, it is preferable to regulate the content of Fe₂O₃ within the above range and to regulate a molar ratio SnO₂/(Fe₂O₃+SnO₂) to 0.8 or more, 0.9 or more, and particularly 0.95 or more. Accordingly, a total light transmittance in a wavelength range of from 400 nm to 770 nm is easily improved.

Y₂O₃ is a component that enhances the strength of the glass. However, Y₂O₃ has a high cost as a raw material itself, and when added in a large amount, the devitrification resistance tends to decrease. Therefore, the content of Y₂O₃ is preferably from 0% to 15%, from 0% to 12%, from 0% to 10%, and particularly from 0.1% to 1%.

Gd₂O₃, NbzOs, La₂O₃, TazOs, and HfO₂ are components that enhance the strength of the glass. However, Gd₂O₃, Nb₂O₅, La₂O₃, TazOs, and HfO₂ have a high cost as a raw material themselves, and when added in a large amount, the devitrification resistance tends to decrease. Therefore, the total amount and the individual content of Gd₂O₃, Nb₂O₅, La₂O₃, TazOs, and HfO₂ are preferably from 0% to 15%, from 0% to 10%, from 0% to 5%, and particularly from 0% to 3%.

The crystallized glass according to the present invention preferably contains substantially no As₂O₃, PbO, or F as a composition, from environmental considerations. In addition, from environmental considerations, it is also preferable that Bi₂O₃ is not substantially contained. The expression "substantially does not contain..." means that the specified components are not actively added as glass components, but the addition of impurity levels is permitted, and specifically, refers to a case where the content of the specified component is less than 0.05%.

In the crystallized glass according to the present invention, it is possible to appropriately combine the suitable content ranges of respective components to obtain a suitable glass composition range. Among them, the following composition ranges (1) to (3) are suitable because of being capable of achieving all of a high level of strength, transmittance, and impact resistance.
(1) Containing, in mol%, from 50% to 80% of SiO₂, from 0% to 4.8% of Al₂O₃, from 0.2% to 15% of P₂O₅, from 1.5% to 30% of LizO, from 0% to less than 3.8% of Na₂O+K₂O, from 0% to less than 3.8% of Na₂O, from 0% to less than 3.8% of K₂O, and from 1.5% to 10% of ZrO₂.
(2) Containing, in mol%, from 50% to 80% of SiO₂, from 0% to 4.8% of Al₂O₃, from 0.2% to 15% of P₂O₅, from 1.5% to 30% of Li₂O, from 0% to 3.5% of Na₂O+K₂O, from 0% to 2% of Na₂O, from 0% to 1.2% of K₂O, and from 1.5% to 10% of ZrO₂.
(3) Containing, in mol%, from 50% to 80% of SiO₂, from 0% to 4.8% of Al₂O₃, from 0.2% to 15% of P₂O₅, from 1.5% to 30% of LizO, from 0% to less than 3.8% of Na₂O+K₂O, from 0% to less than 3.8% of Na₂O, from 0% to less than 3.8% of K₂O, and from 1.5% to 10% of ZrO₂, in which the molar ratio (Na₂O+K₂O)/(Li₂O+Na₂O+K₂O) is 1.20 or less.

The crystallized glass according to the present invention preferably has the following characteristics.

In the crystallized glass according to the present invention, in order to enhance the transmittance, it is preferable that any of lithium disilicate, lithium metasilicate, β-quartz, β-spodumene, trilithium phosphate, and petalite is precipitated, and it is particularly preferable that any one of lithium disilicate, lithium metasilicate, and trilithium phosphate is precipitated. In addition, it is preferable that lithium disilicate or lithium metasilicate is precipitated as a main crystal (crystal with the largest amount of precipitation).

In addition, in the crystallized glass according to the present invention, in order to enhance the compression stress value of the compression stress layer, it is preferable that petalite is not precipitated. Here, the expression "petalite is not precipitated" refers to that, in a spectrum obtained by X-ray diffraction, a ratio I₂/I₁ of a diffraction intensity I₂ of a diffraction peak present at the position of a diffraction angle 2θ = 34.9 ± 0.3° to a diffraction intensity I₁ of a diffraction peak present at the position of a diffraction angle 2θ = 24.7 ± 0.3° is 0.03 or less.

A full width at half maximum FWHM at a maximum peak in the X-ray diffraction spectrum is preferably 0.120° or more, 0.121° or more, 0.122° or more, 0.123° or more, 0.125° or more, 0.130° or more, 0.135° or more, 0.140° or more, and particularly preferably 0.150° or more. When the full width at half maximum FWHM at a maximum peak in the X-ray diffraction spectrum is too small, the transmittance tends to decrease.

Fracture toughness K_{1C} before an ion exchange treatment is preferably 0.7 MPa·m^{0.5} or more, 0.8 MPa·m^{0.5} or more, 1.0 MPa·m^{0.5} or more, 1.2 MPa·m^{0.5} or more, and particularly from 1.5 MPa·m^{0.5} to 3.5 MPa·m^{0.5}. When the fracture toughness K_{1C} is too small, the strength tends to decrease. Here, the "fracture toughness K_{1C}" is measured by using the Single-Edge-Precracked-Beam method (SEPB method) based on JIS R1607 "Fine Ceramics Fracture Toughness Test Method". The SEPB method is a method of measuring a maximum load until a pre-cracked test piece breaks using a three-point bending fracture test on the test piece, and determining plane strain fracture toughness K_{1C} based on the maximum load, a pre-crack length, test piece dimensions, and a distance between bending fulcrums. Note that, the measured value of fracture toughness K_{1C} of each glass is an average value of five measurements.

The Young's modulus before the ion exchange treatment is preferably 70 GPa or more, 72 GPa or more, 73 GPa or more, 74 GPa or more, 75 GPa or more, 76 GPa or more, 77 GPa or more, 78 GPa or more, 79 GPa or more, 80 GPa or more, 83 GPa or more, 85 GPa or more, 87 GPa or more, 90 GPa or more, and particularly from 100 GPa to 150 GPa. When the Young's modulus is small, the crystallized glass tends to bend when the sheet thickness is small. Note that, the "Young's modulus" can be measured by a known resonance method.

Vickers hardness before the ion exchange treatment is preferably 500 or more, 550 or more, 580 or more, and particularly from 600 to 2,500. When the Vickers hardness is too small, scratches easily occur. Note that, the "Vickers hardness" is a value measured by pressing a Vickers indenter under a load of 100 gf using a Vickers hardness meter.

The transmittance in a thickness direction at a wavelength of 400 nm is preferably 75% or more, 76% or more, 77% or more, 78% or more, 79% or more, 81% or more, 83% or more, 85% or more, 88% or more, and particularly 89% or more. Note that, the "transmittance" is a linear transmittance measured in the thickness direction using a spectrophotometer (UV-3100 manufactured by Shimadzu Corporation).

The crystallized glass according to the present invention preferably has the following characteristics after an ion exchange treatment.

The crystallized glass according to the present invention has a portion where a Na ion concentration decreases from a surface side to an inner side of the glass, in other words, a portion where the Na ion concentration increases from the inner side to the surface side of the glass in the crystallized glass. Accordingly, the resistance to crack penetration from the glass surface increases, and the impact resistance tends to increase. Note that, when performing an ion exchange treatment to introduce Na ions into the glass using a NaNO₃ molten salt, the Na ion concentration at the glass surface becomes relatively high, making it possible to form the portion where the Na ion concentration decreases from the surface side to the inner side of the glass. Note that, When Na ions in the NaNO₃ molten salt and Li ions in the glass are subjected to ion exchange, in contrast to the above Na ion concentration, the crystallized glass has a portion where a Li ion concentration increases from the surface side to the inner side of the glass, that is, a portion where the Li ion concentration decreases from the inner side to the surface side of the glass.

The crystallized glass according to the present invention includes, on the surface, a compression stress layer formed by ion exchange, and the compression stress value of the compression stress layer is preferably 100 MPa or more, 110 MPa or more, 120 MPa or more, 130 MPa or more, 140 MPa or more, 150 MPa or more, 170 MPa or more, and particularly 200 MPa or more. When the compression stress value is small, the resistance to crack penetration decreases, and the impact resistance tends to decrease. However, when the compression stress value is too large, a tensile stress value at the center is excessive, and there are many fragments at the time of breakage, which is dangerous. Therefore, the compression stress value is preferably 1000 MPa or less, 900 MPa or less, 800 MPa or less, 700 MPa or less, 600 MPa or less, 500 MPa or less, and particularly 450 MPa or less.

In the case of a sheet shape, a stress depth of the compression stress layer is preferably 13% or more, 14% or more, 15% or more, 16% or more, 17% or more, 17.5% or more, 18% or more, 18.5% or more, and particularly 19% or more, of the sheet thickness. When the stress depth is small, the resistance to crack penetration decreases, and the impact resistance tends to decrease.

An internal tensile stress value is preferably 180 MPa or less, 150 PMa or less, 120 MPa or less, and particularly 110 MPa or less. When the internal tensile stress value is too large, the crystallized glass tends to undergo self fragmentation due to hard scratches. On the other hand, when the internal tensile stress value is too small, it is difficult to ensure the strength of the crystallized glass. The internal tensile stress value is preferably 35 MPa or more, 45 MPa or more, 55 MPa or more, and particularly 70 MPa or more. Note that, the internal tensile stress value can be measured, for example, using a scattered light photoelastic stress meter SLP-2000 manufactured by Orihara industrial co., ltd.

P180 scratch strength is an index of the impact resistance, and is preferably 250 MPa or more, 270 MPa or more, 290 MPa or more, and particularly 300 MPa or more. Note that, an upper limit of the P180 scratch strength is not particularly limited, and is practically 800 MPa or less. Note that, the P180 scratch strength can be measured by a method described below.

The crystallized glass according to the present invention preferably has a sheet shape, and the sheet thickness thereof is preferably 2.0 mm or less, 1.5 mm or less, 1.3 mm or less, 1.1 mm or less, 1.0 mm or less, and particularly 0.9 mm or less. As the sheet thickness is smaller, the weight of the crystallized glass can be reduced. On the other hand, when the sheet thickness is too small, it is difficult to obtain the desired strength. Therefore, the sheet thickness is preferably 0.3 mm or more, 0.4 mm or more, 0.5 mm or more, 0.6 mm or more, and particularly 0.7 mm or more.

A method for manufacturing the crystallized glass according to the present invention will be described by taking, as an example, a case of forming the crystallized glass into a sheet shape. First, glass raw materials mixed to obtain the desired glass composition are charged into a continuous melting furnace and heated and melted at 1200°C to 1700°C, and after fining, the molten glass is supplied to a forming apparatus and formed into a sheet shape, followed by cooling, to obtain a glass sheet (crystalline glass sheet). The crystalline glass refers to a glass that can precipitate crystals before precipitating crystals, and does not necessarily contain crystals. After forming into a sheet shape, a well-known method can be adopted as a method of cutting the crystalline glass into a predetermined size.

As a method for forming the molten glass into a sheet shape, it is preferable to adopt an overflow down-draw method. The overflow down-draw method is a method that can produce a high-quality glass sheet in large quantities. Here, the "overflow down-draw method" is a method for forming a molten glass into a sheet-shaped glass ribbon by causing a molten glass to overflow from both sides of a refractory forming apparatus, and drawing and forming the overflowing molten glass downward while joining the overflowing molten glass at a lower end of the refractory forming apparatus. In the overflow down-draw method, the surface to be the outside surface is not in contact with the surface of the refractory forming apparatus, and a sheet shape is formed. Therefore, it is possible to inexpensively manufacture an unpolished crystalline glass with good surface quality.

In the case of forming by using the overflow down-draw method, it is preferable to provide a cooling step of cooling one surface of the glass ribbon after forming by bringing the same into contact with a cooling roll. Accordingly, even when the glass has a low liquidus viscosity (for example, a glass having a liquidus viscosity of less than 10^{4.2} dPa·s, and particularly a liquidus viscosity of less than 10^{3.8} dPa·s), it is easier to prevent occurrence of devitrification defects during forming. Further, it is preferable to provide a heating step of heating the surface in contact with the cooling roll by disposing a heater on the surface side in contact with the cooling roll below the cooling roll. Accordingly, a temperature difference between both surfaces of the glass ribbon is smaller, making it possible to reduce warpage of the glass ribbon.

In addition to the overflow down-draw method, various forming methods can be adopted. For example, a forming method such as a float method, a down-draw method (slot down-draw method, redraw method, etc.), a roll-out method, and a press method can be adopted.

Next, it is preferable to subject the glass sheet to a heat treatment to obtain a crystallized glass sheet. It is preferable that the heat treatment step includes a separated phase formation step of causing phase separation in a glass matrix, a crystal nucleus formation step of generating a crystal nucleus, and a crystal growth step of growing the generated crystal nucleus. In the separated phase formation step, a heat treatment temperature is preferably from 400°C to 600°C, and particularly preferably from 480°C to 570°C, and a heat treatment time is preferably from 10 minutes to 24 hours, and particularly preferably from 30 minutes to 12 hours. In the crystal nucleus formation step, a heat treatment temperature is preferably from 500°C to 700°C, and particularly preferably from 520°C to 650°C, and a heat treatment time is preferably from 10 minutes to 24 hours, and particularly preferably from 30 minutes to 12 hours. By appropriately adjusting the temperature, the above separated phase formation step and crystal nucleus formation step may be performed simultaneously. In the crystal growth step, a heat treatment temperature is preferably from 730°C to 920°C, and particularly preferably from 750°C to 830°C, and a heat treatment time is preferably from 10 minutes to 5 hours, and particularly preferably from 30 minutes to 3 hours. A temperature increase rate is preferably from 1°C/min to 30°C/min, and particularly preferably from 1°C/min to 10°C/min. When the heat treatment temperature, the heat treatment time, and the temperature increase rate are outside the above ranges, the crystallite size is coarser or crystallinity decreases.

Subsequently, the crystallized glass sheet is subjected to an ion exchange treatment to form, on the surface, a compression stress layer formed by ion exchange. When the ion exchange treatment is performed, the strength can be enhanced because the compression stress layer is formed on the surface. In the compression stress layer formed by ion exchange, a concentration of a component subjected to ion exchange, such as an alkali metal component, changes in a depth direction of the compression stress layer. Conditions for the ion exchange treatment are not particularly limited, and optimum conditions may be selected in consideration of the viscosity characteristics, the thickness, the internal tensile stress, dimensional changes or the like of the glass. Particularly, it is preferable to subject the Na ions in a NaNO₃ molten salt or a KNO₃ and NaNO₃ mixed molten salt and the Li component in the glass to ion exchange. The ion exchange between the Na ions and the Li component has a faster exchange speed than ion exchange between K ions and a Na component, and the ion exchange treatment can be performed efficiently. Note that, a temperature of an ion exchange solution is preferably from 380°C to 500°C, and an ion exchange time is preferably from 1 hour to 15 hours, from 2 hours to 10 hours, from 3 hours to 9 hours, and particularly preferably from 4 hours to 8 hours.

### EXAMPLES

Hereinafter, the present invention will be described based on Examples. Note that the following Examples are merely illustrative. The present invention is not limited to the following Examples in any way.

Tables 1 to 6 show the glass compositions of crystalline glass sheets (Samples Nos. 1 to 55) and an amorphous glass sheet (Sample No. 56). Note that, R₂O represents the total amount of Li₂O, Na₂O, and K₂O.

**[Table 1]**

| [mol%] | No. 1 | No. 2 | No. 3 | No. 4 | No. 5 | No. 6 | No. 7 | No. 8 | No. 9 | No. 10 |
|---|---|---|---|---|---|---|---|---|---|---|
| SiO₂ | 67.0 | 67.0 | 67.0 | 67.0 | 67.0 | 66.3 | 67.0 | 67.0 | 67.0 | 67.0 |
| Al₂O₃ | 3.0 | 2.5 | 2.0 | 2.5 | 2.5 | 2.0 | 2.0 | 1.5 | 1.0 | 2.0 |
| P₂O₅ | 0.7 | 0.7 | 0.7 | 1.2 | 1.2 | 1.7 | 1.7 | 2.2 | 2.7 | 1.2 |
| Li₂O | 21.3 | 21.3 | 21.3 | 21.3 | 21.3 | 21.1 | 21.3 | 21.3 | 21.3 | 21.3 |
| Na₂O | 2.4 | 2.4 | 2.4 | 2.4 | 2.4 | 2.3 | 2.4 | 2.4 | 2.4 | 2.4 |
| K₂O | 1.4 | 1.4 | 1.4 | 1.4 | 1.4 | 1.4 | 1.4 | 1.4 | 1.4 | 1.4 |
| MgO | 0.0 | 0.0 | 0.0 | 0.0 | 0.0 | 0.0 | 0.0 | 0.0 | 0.0 | 0.0 |
| ZrO₂ | 4.2 | 4.7 | 5.2 | 4.2 | 4.2 | 5.2 | 4.2 | 4.2 | 4.2 | 4.7 |
| SnO₂ | 0.0 | 0.0 | 0.0 | 0.0 | 0.0 | 0.0 | 0.0 | 0.0 | 0.0 | 0.0 |
| SO₃ | 0.0 | 0.0 | 0.0 | 0.0 | 0.0 | 0.0 | 0.0 | 0.0 | 0.0 | 0.0 |
| Y₂O₃ | 0.0 | 0.0 | 0.0 | 0.0 | 0.0 | 0.0 | 0.0 | 0.0 | 0.0 | 0.0 |
| Al₂O₃/SiO₂ | 0.045 | 0.037 | 0.030 | 0.037 | 0.037 | 0.030 | 0.030 | 0.022 | 0.015 | 0.030 |
| Al₂O₃/Li₂O | 0.141 | 0.117 | 0.094 | 0.117 | 0.117 | 0.095 | 0.094 | 0.070 | 0.047 | 0.094 |
| Al₂O₃/(SiO₂+Li₂O) | 0.034 | 0.028 | 0.023 | 0.028 | 0.028 | 0.023 | 0.023 | 0.017 | 0.011 | 0.023 |
| Na₂O+K₂O | 3.8 | 3.8 | 3.8 | 3.8 | 3.8 | 3.7 | 3.8 | 3.8 | 3.8 | 3.8 |
| (Na₂O+K₂O)/R₂O | 0.15 | 0.15 | 0.15 | 0.15 | 0.15 | 0.15 | 0.15 | 0.15 | 0.15 | 0.15 |

**[Table 2]**

| [mol%] | No. 11 | No. 12 | No. 13 | No. 14 | No. 15 | No. 16 | No. 17 | No. 18 | No. 19 | No. 20 |
|---|---|---|---|---|---|---|---|---|---|---|
| SiO₂ | 66.6 | 66.3 | 65.7 | 67.0 | 66.9 | 66.2 | 66.9 | 66.9 | 66.87 | 66.769 |
| Al₂O₃ | 2.0 | 2.0 | 2.0 | 2.5 | 2.3 | 2.0 | 1.7 | 1.4 | 1.4 | 1.4 |
| P₂O₅ | 1.2 | 1.2 | 1.2 | 1.0 | 1.2 | 1.2 | 1.2 | 1.2 | 1.2 | 1.2 |
| Li₂O | 21.2 | 21.1 | 20.9 | 21.3 | 21.3 | 21.1 | 21.3 | 21.3 | 23.2 | 25.1 |
| Na₂O | 2.4 | 2.4 | 2.3 | 2.4 | 2.4 | 2.4 | 2.4 | 2.4 | 1.2 | 0.1 |
| K₂O | 1.4 | 1.3 | 1.3 | 1.4 | 1.4 | 1.4 | 1.4 | 1.4 | 0.7 | 0.0 |
| MgO | 0.0 | 0.0 | 0.0 | 0.0 | 0.0 | 0.0 | 0.0 | 0.0 | 0.0 | 0.0 |
| ZrO₂ | 5.2 | 5.7 | 6.6 | 4.4 | 4.5 | 4.7 | 5.1 | 5.4 | 5.4 | 5.4 |
| SnO₂ | 0.0 | 0.0 | 0.0 | 0.0 | 0.0 | 0.0 | 0.0 | 0.0 | 0.0 | 0.0 |
| SO₃ | 0.0 | 0.0 | 0.0 | 0.0 | 0.0 | 0.0 | 0.0 | 0.0 | 0.03 | 0.03 |
| Y₂O₃ | 0.0 | 0.0 | 0.0 | 0.0 | 0.0 | 1.0 | 0.0 | 0.0 | 0.0 | 0.0 |
| Al₂O₃/SiO₂ | 0.030 | 0.030 | 0.030 | 0.037 | 0.034 | 0.030 | 0.025 | 0.021 | 0.021 | 0.021 |
| Al₂O₃/Li₂O | 0.094 | 0.095 | 0.096 | 0.117 | 0.108 | 0.095 | 0.080 | 0.066 | 0.060 | 0.056 |
| Al₂O₃/(SiO₂+Li₂O) | 0.023 | 0.023 | 0.023 | 0.028 | 0.026 | 0.023 | 0.019 | 0.016 | 0.016 | 0.015 |
| Na₂O+K₂O | 3.8 | 3.7 | 3.6 | 3.8 | 3.8 | 3.8 | 3.8 | 3.8 | 1.9 | 0.1 |
| (Na₂O+K₂O)/R₂O | 0.15 | 0.15 | 0.15 | 0.15 | 0.15 | 0.15 | 0.15 | 0.15 | 0.076 | 0.0040 |
| Fe₂O₃ [ppm] | 0 | 0 | 0 | 0 | 0 | 0 | 0 | 0 | 0 | 20 |

**[Table 3]**

| [mol%] | No. 21 | No. 22 | No. 23 | No. 24 | No. 25 | No. 26 | No. 27 | No. 28 | No. 29 | No. 30 |
|---|---|---|---|---|---|---|---|---|---|---|
| SiO₂ | 66.770 | 66.770 | 66.870 | 66.769 | 66.767 | 66.769 | 66.769 | 66.769 | 66.869 | 66.869 |
| Al₂O₃ | 1.4 | 1.4 | 1.4 | 1.9 | 2.4 | 1.7 | 2.0 | 2.3 | 2.5 | 2.7 |
| P₂O₅ | 1.2 | 1.2 | 1.2 | 1.2 | 1.2 | 1.2 | 1.2 | 1.2 | 1.2 | 1.2 |
| Li₂O | 22.3 | 24.2 | 23.2 | 25.1 | 25.1 | 25.1 | 25.1 | 25.1 | 25.1 | 25.1 |
| Na₂O | 1.8 | 0.6 | 1.9 | 0.1 | 0.1 | 0.1 | 0.1 | 0.1 | 0.1 | 0.1 |
| K₂O | 1.1 | 0.4 | 0.0 | 0.0 | 0.0 | 0.0 | 0.0 | 0.0 | 0.0 | 0.0 |
| MgO | 0.0 | 0.0 | 0.0 | 0.0 | 0.0 | 0.0 | 0.0 | 0.0 | 0.0 | 0.0 |
| ZrO₂ | 5.4 | 5.4 | 5.4 | 4.9 | 4.4 | 5.1 | 4.8 | 4.5 | 4.2 | 4.0 |
| SnO₂ | 0.0 | 0.0 | 0.0 | 0.0 | 0.0 | 0.0 | 0.0 | 0.0 | 0.0 | 0.0 |
| SO₃ | 0.03 | 0.03 | 0.03 | 0.03 | 0.03 | 0.03 | 0.03 | 0.03 | 0.03 | 0.03 |
| Y₂O₃ | 0.0 | 0.0 | 0.0 | 0.0 | 0.0 | 0.0 | 0.0 | 0.0 | 0.0 | 0.0 |
| Al₂O₃/SiO₂ | 0.021 | 0.021 | 0.021 | 0.028 | 0.036 | 0.025 | 0.030 | 0.034 | 0.037 | 0.040 |
| Al₂O₃/Li₂O | 0.063 | 0.058 | 0.060 | 0.076 | 0.096 | 0.068 | 0.080 | 0.092 | 0.100 | 0.108 |
| Al₂O₃/(SiO₂+Li₂O) | 0.016 | 0.015 | 0.016 | 0.021 | 0.026 | 0.019 | 0.022 | 0.025 | 0.027 | 0.029 |
| Na₂O+K₂O | 2.9 | 1.0 | 1.9 | 0.1 | 0.1 | 0.1 | 0.1 | 0.1 | 0.1 | 0.1 |
| (Na₂O+K₂O)/R₂O | 0.12 | 0.040 | 0.076 | 0.0040 | 0.0040 | 0.0040 | 0.0040 | 0.0040 | 0.0040 | 0.0040 |
| Fe₂O₃ [ppm] | 0 | 0 | 0 | 30 | 90 | 30 | 30 | 30 | 30 | 30 |

**[Table 4]**

| [mol%] | No. 31 | No. 32 | No. 33 | No. 34 | No. 35 | No. 36 | No. 37 | No. 38 | No. 39 | No. 40 |
|---|---|---|---|---|---|---|---|---|---|---|
| SiO₂ | 66.869 | 66.869 | 66.868 | 66.868 | 66.899 | 67.869 | 66.969 | 67.869 | 67.769 | 66.869 |
| Al₂O₃ | 2.0 | 2.9 | 3.1 | 3.3 | 2.7 | 2.7 | 2.7 | 2.7 | 2.4 | 1.9 |
| P₂O₅ | 1.7 | 1.2 | 1.2 | 1.2 | 1.2 | 1.2 | 1.2 | 1.2 | 1.2 | 1.2 |
| Li₂O | 25.1 | 25.1 | 25.1 | 25.1 | 25.1 | 24.1 | 24.1 | 25.1 | 25.1 | 25.1 |
| Na₂O | 0.1 | 0.1 | 0.1 | 0.1 | 0.0 | 0.1 | 1.0 | 0.1 | 0.1 | 0.5 |
| K₂O | 0.0 | 0.0 | 0.0 | 0.0 | 0.0 | 0.0 | 0.0 | 0.0 | 0.0 | 0.0 |
| MgO | 0.0 | 0.0 | 0.0 | 0.0 | 0.0 | 0.0 | 0.0 | 0.0 | 0.0 | 0.0 |
| ZrO₂ | 4.2 | 3.8 | 3.6 | 3.4 | 4.0 | 4.0 | 4.0 | 3.0 | 3.4 | 4.4 |
| SnO₂ | 0.0 | 0.0 | 0.0 | 0.0 | 0.1 | 0.0 | 0.0 | 0.0 | 0.0 | 0.0 |
| SO₃ | 0.03 | 0.03 | 0.03 | 0.03 | 0.00 | 0.03 | 0.03 | 0.03 | 0.03 | 0.03 |
| Y₂O₃ | 0.0 | 0.0 | 0.0 | 0.0 | 0.0 | 0.0 | 0.0 | 0.0 | 0.0 | 0.0 |
| Al₂O₃/SiO₂ | 0.030 | 0.043 | 0.046 | 0.049 | 0.040 | 0.040 | 0.040 | 0.040 | 0.035 | 0.028 |
| Al₂O₃/Li₂O | 0.080 | 0.116 | 0.124 | 0.131 | 0.108 | 0.112 | 0.112 | 0.108 | 0.096 | 0.076 |
| Al₂O₃/(SiO₂+Li₂O) | 0.022 | 0.032 | 0.034 | 0.036 | 0.029 | 0.029 | 0.030 | 0.029 | 0.026 | 0.021 |
| Na₂O+K₂O | 0.1 | 0.1 | 0.1 | 0.1 | 0.0 | 0.1 | 1.0 | 0.1 | 0.1 | 0.5 |
| (Na₂O+K₂O)/R₂O | 0.0040 | 0.0040 | 0.0040 | 0.0040 | 0.0 | 0.0041 | 0.040 | 0.0040 | 0.0040 | 0.020 |
| Fe₂O₃ [ppm] | 30 | 30 | 60 | 70 | 30 | 30 | 30 | 20 | 30 | 20 |

**[Table 5]**

| [mol%] | No. 41 | No. 42 | No. 43 | No. 44 | No. 45 | No. 46 | No. 47 | No. 48 | No. 49 | No. 50 |
|---|---|---|---|---|---|---|---|---|---|---|
| SiO₂ | 66.869 | 66.869 | 66.769 | 66.799 | 67.369 | 66.869 | 66.869 | 66.869 | 67.769 | 66.769 |
| B₂O₃ | 0.0 | 0.0 | 0.5 | 0.0 | 0.0 | 0.0 | 0.0 | 0.0 | 0.0 | 0.0 |
| Al₂O₃ | 1.4 | 1.4 | 1.9 | 1.9 | 1.4 | 1.4 | 1.4 | 1.4 | 1.4 | 1.4 |
| P₂O₅ | 1.2 | 1.2 | 1.2 | 1.2 | 1.2 | 1.2 | 1.2 | 1.7 | 1.2 | 1.2 |
| Li₂O | 25.1 | 25.1 | 25.1 | 25.1 | 25.1 | 25.6 | 25.1 | 25.1 | 25.1 | 26.1 |
| Na₂O | 1.0 | 0.5 | 0.1 | 0.5 | 0.5 | 0.5 | 0.5 | 0.5 | 0.1 | 0.1 |
| K₂O | 0.0 | 0.5 | 0.0 | 0.0 | 0.0 | 0.0 | 0.0 | 0.0 | 0.0 | 0.0 |
| MgO | 0.0 | 0.0 | 0.0 | 0.0 | 0.0 | 0.0 | 0.0 | 0.0 | 0.0 | 0.0 |
| ZrO₂ | 4.4 | 4.4 | 4.4 | 4.4 | 4.4 | 4.4 | 4.9 | 4.4 | 4.4 | 4.4 |
| SnO₂ | 0.0 | 0.0 | 0.0 | 0.1 | 0.0 | 0.0 | 0.0 | 0.0 | 0.0 | 0.0 |
| SO₃ | 0.03 | 0.03 | 0.03 | 0.00 | 0.03 | 0.03 | 0.03 | 0.03 | 0.03 | 0.03 |
| Al₂O₃/SiO₂ | 0.021 | 0.021 | 0.028 | 0.028 | 0.021 | 0.021 | 0.021 | 0.021 | 0.021 | 0.021 |
| Al₂O₃/Li₂O | 0.056 | 0.056 | 0.076 | 0.076 | 0.056 | 0.055 | 0.056 | 0.056 | 0.056 | 0.054 |
| Al₂O₃/(SiO₂+Li₂O) | 0.015 | 0.015 | 0.021 | 0.021 | 0.015 | 0.015 | 0.015 | 0.015 | 0.015 | 0.015 |
| Na₂O+K₂O | 1.0 | 1.0 | 0.1 | 0.5 | 0.5 | 0.5 | 0.5 | 0.5 | 0.1 | 0.1 |
| (Na₂O+K₂O)/R₂O | 0.038 | 0.038 | 0.004 | 0.020 | 0.020 | 0.019 | 0.020 | 0.020 | 0.004 | 0.004 |
| Fe₂O₃ [ppm] | 20 | 20 | 20 | 30 | 30 | 20 | 20 | 20 | 30 | 20 |

**[Table 6]**

| [mol%] | No. 51 | No. 52 | No. 53 | No. 54 | No. 55 | No. 56 |
|---|---|---|---|---|---|---|
| SiO₂ | 66.769 | 67.299 | 66.799 | 66.799 | 66.799 | 60.543 |
| B₂O₃ | 0.0 | 0.0 | 0.0 | 0.0 | 0.0 | 0.0 |
| Al₂O₃ | 1.4 | 1.4 | 1.4 | 1.4 | 1.4 | 18.8 |
| P₂O₅ | 2.2 | 1.2 | 1.2 | 1.2 | 1.7 | 4.3 |
| Li₂O | 25.1 | 25.1 | 25.6 | 25.1 | 25.1 | 7.2 |
| Na₂O | 0.1 | 0.5 | 0.5 | 0.5 | 0.5 | 8.1 |
| K₂O | 0.0 | 0.0 | 0.0 | 0.0 | 0.0 | 0.4 |
| MgO | 0.0 | 0.0 | 0.0 | 0.0 | 0.0 | 0.5 |
| ZrO₂ | 4.4 | 4.4 | 4.4 | 4.9 | 4.4 | 0.0 |
| SnO₂ | 0.0 | 0.1 | 0.1 | 0.1 | 0.1 | 0.05 |
| SO₃ | 0.03 | 0.00 | 0.00 | 0.00 | 0.00 | 0.00 |
| Al₂O₃/SiO₂ | 0.021 | 0.021 | 0.021 | 0.021 | 0.021 | 0.310 |
| Al₂O₃/Li₂O | 0.056 | 0.056 | 0.055 | 0.056 | 0.056 | 2.600 |
| Al₂O₃/(SiO₂+Li₂O) | 0.015 | 0.015 | 0.015 | 0.015 | 0.015 | 0.277 |
| Na₂O+K₂O | 0.1 | 0.5 | 0.5 | 0.5 | 0.5 | 8.5 |
| (Na₂O+K₂O)/R₂O | 0.004 | 0.020 | 0.019 | 0.020 | 0.020 | 0.54 |
| Fe₂O₃ [ppm] | 20 | 30 | 20 | 20 | 20 | 0 |

First, glass raw materials were mixed to have the glass compositions shown in Tables 1 to 6, and melted at 1500°C for 8 hours using a platinum pot. Subsequently, the obtained molten glass was poured onto a carbon sheet and formed into a flat sheet shape to obtain a glass sheet. The surface of the obtained glass sheet was optically polished to a sheet thickness of 0.6 mm, and then various characteristics thereof were evaluated.

Subsequently, the obtained crystalline glass sheets (Sample Nos. 1 to 55) were subjected to a heat treatment in an electric furnace under the heat treatment conditions shown in Tables 7 to 13 to precipitate and grow crystals in the glass matrix. Thereafter, cooling to room temperature was performed to obtain a crystallized glass sheet. No particular heat treatment was performed on the amorphous glass sheet (Sample No. 56). The following characteristics of the obtained glass sheet were evaluated. The results are shown in Tables 7 to 13.

**[Table 7]**

| | Example 1 | Example 2 | Example 3 | Example 4 | Example 5 | Example 6 | Example 7 | Example 8 | Example 9 | Example 10 |
|---|---|---|---|---|---|---|---|---|---|---|
| Glass | No. 1 | No. 2 | No. 3 | No. 4 | No. 5 | No. 6 | No. 6 | No. 7 | No. 8 | No. 9 |
| Thickness t [µm] | 600 | 600 | 600 | 600 | 600 | 600 | 600 | 600 | 600 | 600 |
| Heat treatment conditions | 500°C for 3 hours | 540°C for 3 hours | 540°C for 3 hours | 540°C for 3 hours | 540°C for 3 hours | 540°C for 3 hours | 540°C for 3 hours | 540°C for 3 hours | 540°C for 3 hours | 540°C for 3 hours |
| | →590°C for 12 hours | →630°C for 12 hours | →630°C for 12 hours | →590°C for 12 hours | →630°C for 12 hours | →590°C for 12 hours | →630°C for 12 hours | →590°C for 12 hours | →590°C for 12 hours | →590°C for 12 hours |
| | →810°C for 3 hours | →790°C for 3 hours | →810°C for 3 hours | →790°C for 3 hours | →810°C for 3 hours | →790°C for 3 hours | →810°C for 3 hours | →790°C for 3 hours | →790°C for 3 hours | →790°C for 3 hours |
| Precipitated crystal | Lithium disilicate | Lithium disilicate | Lithium disilicate | Lithium disilicate, trilithium phosphate | Lithium disilicate, trilithium phosphate | Lithium disilicate, trilithium phosphate | Lithium disilicate, trilithium phosphate | Lithium disilicate, trilithium phosphate | Lithium disilicate, trilithium phosphate | Lithium disilicate, trilithium phosphate |
| XRD full width at half maximum FWHM at maximum peak [°] | 0.128 | 0.126 | 0.132 | 0.161 | 0.145 | 0.169 | 0.127 | Not measured | Not measured | Not measured |
| Transmittance at 400 nm [%] | 83.1% | Not measured | Not measured | 84.2% | Not measured | 86.3% | Not measured | Not measured | Not measured | Not measured |
| Chemical tempering condition | NaNO₃, 430°C for 6 hours | Not measured | Not measured | Not measured | Not measured | Not measured | Not measured | Not measured | Not measured | Not measured |
| Surface compression stress [MPa] | 248 | Not measured | Not measured | Not measured | Not measured | Not measured | Not measured | Not measured | Not measured | Not measured |
| Compression stress layer depth DOC [µm] | 112 | Not measured | Not measured | Not measured | Not measured | Not measured | Not measured | Not measured | Not measured | Not measured |
| DOC/t [%] | 18.6% | Not measured | Not measured | Not measured | Not measured | Not measured | Not measured | Not measured | Not measured | Not measured |
| Central tensile stress [MPa] | 84 | Not measured | Not measured | Not measured | Not measured | Not measured | Not measured | Not measured | Not measured | Not measured |
| P180 scratch strength [MPa] | Not measured | Not measured | Not measured | Not measured | Not measured | Not measured | Not measured | Not measured | Not measured | Not measured |

**[Table 8]**

| | Example 11 | Example 12 | Example 13 | Example 14 | Example 15 | Example 16 | Example 17 | Example 18 | Example 19 | Example 20 |
|---|---|---|---|---|---|---|---|---|---|---|
| Glass | No. 10 | No. 10 | No. 10 | No. 10 | No. 10 | No. 10 | No. 11 | No. 12 | No. 13 | No. 14 |
| Thickness t [µm] | 600 | 600 | 600 | 600 | 600 | 600 | 600 | 600 | 600 | 600 |
| Heat treatment conditions | 520°C for 3 hours | 520°C for 3 hours | 520°C for 3 hours | 520°C for 3 hours | 520°C for 3 hours | 520°C for 3 hours | 520°C for 3 hours | 520°C for 3 hours | 520°C for 3 hours | 520°C for 3 hours |
| | →590°C for 12 hours | →570°C for 12 hours | →570°C for 12 hours | →570°C for 12 hours | →570°C for 12 hours | →610°C for 12 hours | →570°C for 12 hours | →570°C for 12 hours | →570°C for 12 hours | →570°C for 12 hours |
| | →790°C for 3 hours | →750°C for 3 hours | →770°C for 3 hours | →790°C for 3 hours | →810°C for 3 hours | →810°C for 3 hours | →770°C for 3 hours | →770°C for 3 hours | →770°C for 3 hours | →770°C for 3 hours |
| Precipitated crystal | Lithium disilicate, trilithium phosphate | Lithium disilicate | Lithium disilicate | Lithium disilicate | Lithium disilicate | Lithium disilicate | Lithium disilicate | Lithium disilicate | Lithium disilicate | Not measured |
| XRD full width at half maximum FWHM at maximum peak [°] | Not measured | 0.189 | 0.176 | 0.173 | 0.158 | 0.159 | 0.178 | 0.164 | 0.132 | Not measured |
| Transmittance at 400 nm [%] | Not measured | 86.5% | 88.1% | 84.5% | Not measured | Not measured | 87.7% | 82.4% | 79.2% | Not measured |
| Chemical tempering condition | Not measured | Not measured | Not measured | Not measured | Not measured | Not measured | NaNO₃, 430°C for 6 hours | Not measured | Not measured | Not measured |
| Surface compression stress [MPa] | Not measured | Not measured | Not measured | Not measured | Not measured | Not measured | 215 | Not measured | Not measured | Not measured |
| Compression stress layer depth DOC [µm] | Not measured | Not measured | Not measured | Not measured | Not measured | Not measured | 107 | Not measured | Not measured | Not measured |
| DOC/t [%] | Not measured | Not measured | Not measured | Not measured | Not measured | Not measured | 17.8% | Not measured | Not measured | Not measured |
| Central tensile stress [MPa] | Not measured | Not measured | Not measured | Not measured | Not measured | Not measured | 78 | Not measured | Not measured | Not measured |
| P180 scratch strength [MPa] | Not measured | Not measured | Not measured | Not measured | Not measured | Not measured | 304 | Not measured | Not measured | Not measured |

**[Table 9]**

| | Example 21 | Example 22 | Example 23 | Example 24 | Example 25 | Example 26 | Example 27 | Example 28 | Example 29 | Example 30 |
|---|---|---|---|---|---|---|---|---|---|---|
| Glass | No. 15 | No. 16 | No. 1 | No. 17 | No. 18 | No. 18 | No. 18 | No. 18 | No. 18 | No. 18 |
| Thickness t [µm] | 600 | 600 | 600 | 600 | 600 | 600 | 600 | 600 | 600 | 600 |
| Heat treatment conditions | 520°C for 3 hours | 520°C for 3 hours | 615°C for 12 hours | 570°C for 12 hours | 570°C for 6 hours | 570°C for 6 hours | 570°C for 6 hours | 570°C for 12 hours | 570°C for 12 hours | 570°C for 12 hours |
| | →570°C for 12 hours | →570°C for 12 hours | | | | | | | | |
| | | | →850°C for 3 hours | →720°C for 3 hours | ~-720°C for 3 hours | →770°C for 3 hours | →820°C for 3 hours | | →630°C for 3 hours | →680°C for 3 hours |
| | →770°C for 3 hours | →770°C for 3 hours | | | | | | | | |
| Precipitated crystal | Not measured | Not measured | Lithium disilicate, trilithium phosphate | Lithium disilicate | Lithium disilicate, lithium metasilicate | Lithium disilicate | Lithium disilicate, trilithium phosphate | Lithium metasilicate | Lithium metasilicate | Lithium metasilicate |
| XRD full width at half maximum FWHM at maximum peak [°] | Not measured | Not measured | 0.118 | 0.180 | 0.216 | 0.188 | 0.151 | 0.520 | 0.548 | 0.594 |
| Transmittance at 400 nm [%] | Not measured | Not measured | 72.5% | 89.1% | 86.0% | 88.3% | 86.8% | 89.4% | 89.6% | 89.3% |
| Chemical tempering condition | Not measured | Not measured | NaNO₃, 430°C for 6 hours | Not measured | NaNO₃, 430°C for 6 hours | NaNO₃, 430°C for 6 hours | NaNO₃, 430°C for 6 hours | NaNO₃, 430°C for 6 hours | NaNO₃, 430°C for 6 hours | NaNO₃, 430°C for 6 hours |
| Surface compression stress [MPa] | Not measured | Not measured | 269 | Not measured | 265 | 249 | 240 | 311 | 331 | 285 |
| Compression stress layer depth DOC [µm] | Not measured | Not measured | 104 | Not measured | 108 | 102 | 101 | 111 | 104 | 110 |
| DOC/t [%] | Not measured | Not measured | 17.3% | Not measured | 18.0% | 17.1% | 16.9% | 18.5% | 17.3% | 18.4% |
| Central tensile stress [MPa] | Not measured | Not measured | 81 | Not measured | 97 | 76 | 75 | 112 | 101 | 97 |
| P180 scratch strength [MPa] | Not measured | Not measured | 385 | Not measured | 331 | 347 | 333 | 338 | Not measured | Not measured |

**[Table 10]**

| | Example 31 | Example 32 | Example 33 | Example 34 | Example 35 | Example 36 | Example 37 | Example 38 | Example 39 | Example 40 |
|---|---|---|---|---|---|---|---|---|---|---|
| Glass | No. 19 | No. 20 | No. 21 | No. 22 | No. 23 | No. 24 | No. 25 | No. 26 | No. 27 | No. 28 |
| Thickness t [µm] | 600 | 600 | 600 | 600 | 600 | 850 | 600 | 600 | 600 | 600 |
| Heat treatment conditions | 570°C for 12 hours | 570°C for 12 hours | 570°C for 6 hours | 570°C for 6 hours | 570°C for 6 hours | 570°C for 12 hours | 570°C for 12 hours | 570°C for 12 hours | 570°C for 12 hours | 570°C for 12 hours |
| | →720°C for 3 hours | →720°C for 3 hours | →720°C for 3 hours | →720°C for 3 hours | →720°C for 3 hours | →720°C for 3 hours | →720°C for 3 hours | →720°C for 3 hours | →700°C for 3 hours | →700°C for 3 hours |
| Precipitated crystal | Lithium disilicate | Lithium disilicate | Lithium disilicate | Lithium disilicate | Lithium disilicate | Not measured | Lithium disilicate | Not measured | Not measured | Lithium disilicate |
| XRD full width at half maximum FWHM at maximum peak [°] | 0.351 | 0.341 | 0.283 | 0.291 | 0.212 | Not measured | 0.655 | Not measured | Not measured | 0.722 |
| Transmittance at 400 nm [%] | Not measured | 88.1% | Not measured | Not measured | Not measured | 87.5% | 89.6% | 85.5% | 87.2% | 87.3% |
| Chemical tempering condition | NaNO₃, 430°C for 6 hours | NaNO₃, 430°C for 4 hours | NaNO₃, 430°C for 6 hours | NaNO₃, 430°C for 6 hours | NaNO₃, 430°C for 6 hours | NaNO₃, 430°C for 4 hours | NaNO₃, 430°C for 6 hours | NaNO₃, 430°C for 4 hours | NaNO₃, 430°C for 4 hours | Not measured |
| Surface compression stress [MPa] | 370 | 620 | 275 | 447 | 333 | 651 | 589 | 514 | 561 | Not measured |
| Compression stress layer depth DOC [µm] | 110 | 94 | 112 | 113 | 117 | 102 | 92 | 108 | 109 | Not measured |
| DOC/t [%] | 18.3% | 15.7% | 18.7% | 18.8% | 19.4% | 12.0% | 15.4% | 18.0% | 18.2% | Not measured |
| Central tensile stress [MPa] | 130 | 138 | 98 | 163 | 134 | 89 | 136 | 192 | 157 | Not measured |
| P180 scratch strength [MPa] | 411 | 552 | Not measured | Not measured | Not measured | Not measured | 513 | Not measured | Not measured | Not measured |

**[Table 11]**

| | Example 41 | Example 42 | Example 43 | Example 44 | Example 45 | Example 46 | Example 47 | Example 48 | Example 49 | Example 50 |
|---|---|---|---|---|---|---|---|---|---|---|
| Glass | No. 29 | No. 30 | No. 31 | No. 32 | No. 33 | No. 34 | No. 35 | No. 36 | No. 37 | No. 38 |
| Thickness t [µm] | 600 | 600 | 1000 | 600 | 600 | 600 | 600 | 600 | 600 | 600 |
| Heat treatment conditions | 570°C for 12 hours | 570°C for 12 hours | 570°C for 12 hours | 570°C for 12 hours | 570°C for 12 hours | 570°C for 12 hours | 570°C for 12 hours | 570°C for 12 hours | 570°C for 12 hours | 570°C for 12 hours |
| | →720°C for 3 hours | →720°C for 3 hours | →720°C for 3 hours | →720°C for 3 hours | →720°C for 3 hours | →720°C for 3 hours | →720°C for 3 hours | →720°C for 3 hours | →720°C for 3 hours | →720°C for 3 hours |
| Precipitated crystal | Lithium disilicate | Lithium disilicate, petalite | Not measured | Not measured | Lithium disilicate, petalite | Not measured | Not measured | Lithium disilicate, petalite | Lithium disilicate, petalite | Lithium disilicate, petalite |
| XRD full width at half maximum FWHM at maximum peak [°] | 0.760 | 0.648 | Not measured | Not measured | 0.583 | Not measured | Not measured | 0.698 | 0.538 | 0.670 |
| Transmittance at 400 nm [%] | 89.4% | 89.8% | 87.2% | 89.8% | 90.1% | 89.9% | 88.9% | 87.8% | 89.9% | 89.4% |
| Chemical tempering condition | NaNO₃, 430°C for 4 hours | NaNO₃, 430°C for 6 hours | Not measured | NaNO₃, 430°C for 4 hours | NaNO₃, 430°C for 4 hours | NaNO₃, 430°C for 4 hours | NaNO₃, 430°C for 4 hours | NaNO₃, 430°C for 4 hours | NaNO₃, 430°C for 4 hours | NaNO₃, 430°C for 4 hours |
| Surface compression stress [MPa] | 640 | 539 | Not measured | 609 | 603 | 582 | 572 | 494 | 416 | 464 |
| Compression stress layer depth DOC [µm] | 86 | 93 | Not measured | 82 | 82 | 82 | 83 | 90 | 95 | 81 |
| DOC/t [%] | 14.3% | 15.5% | Not measured | 13.7% | 13.6% | 13.7% | 13.9% | 15.0% | 15.9% | 13.5% |
| Central tensile stress [MPa] | 106 | 125 | Not measured | 102 | 99 | 97 | 100 | 104 | 109 | 75 |
| P180 scratch strength [MPa] | Not measured | 500 | Not measured | Not measured | Not measured | Not measured | Not measured | Not measured | Not measured | Not measured |

**[Table 12]**

| | Example 51 | Example 52 | Example 53 | Example 54 | Example 55 | Example 56 | Example 57 | Example 58 | Example 59 | Example 60 |
|---|---|---|---|---|---|---|---|---|---|---|
| Glass | No. 39 | No. 40 | No. 41 | No. 42 | No. 43 | No. 44 | No. 45 | No. 46 | No. 47 | No. 48 |
| Thickness t [µm] | 600 | 600 | 600 | 600 | 600 | 600 | 600 | 600 | 600 | 600 |
| Heat treatment conditions | 570°C for 12 hours | 570°C for 12 hours | 570°C for 12 hours | 570°C for 12 hours | 570°C for 12 hours | 570°C for 12 hours | 570°C for 12 hours | 570°C for 12 hours | 570°C for 12 hours | 570°C for 12 hours |
| | →720°C for 3 hours | →720°C for 3 hours | →720°C for 3 hours | →720°C for 3 hours | →720°C for 3 hours | →720°C for 3 hours | →720°C for 3 hours | →720°C for 3 hours | →720°C for 3 hours | →720°C for 3 hours |
| Precipitated crystal | Not measured | Lithium disilicate | Lithium disilicate | Lithium disilicate | Lithium disilicate | Lithium disilicate | Not measured | Not measured | Not measured | Not measured |
| XRD full width at half maximum FWHM at maximum peak [°] | Not measured | 0.639 | 0.614 | 0.575 | 0.640 | 0.654 | Not measured | Not measured | Not measured | Not measured |
| Transmittance at 400 nm [%] | 89.1% | 89.4% | 89.4% | 87.4% | 89.1% | 87.0% | Not measured | Not measured | Not measured | Not measured |
| Chemical tempering condition | Not measured | NaNO₃, 430°C for 4 hours | NaNO₃, 430°C for 4 hours | NaNO₃, 430°C for 4 hours | NaNO₃, 430°C for 4 hours | NaNO₃, 430°C for 4 hours | Not measured | Not measured | Not measured | Not measured |
| Surface compression stress [MPa] | Not measured | 521 | 439 | 447 | 584 | 490 | Not measured | Not measured | Not measured | Not measured |
| Compression stress layer depth DOC [µm] | Not measured | 96 | 102 | 97 | 86 | 96 | Not measured | Not measured | Not measured | Not measured |
| DOC/t [%] | Not measured | 16.0% | 17.0% | 16.1% | 14.3% | | Not measured | Not measured | Not measured | Not measured |
| Central tensile stress [MPa] | Not measured | 126 | 126 | 107 | 106 | 116 | Not measured | Not measured | Not measured | Not measured |
| P180 scratch strength [MPa] | Not measured | 510 | Not measured | Not measured | Not measured | 500 | Not measured | Not measured | Not measured | Not measured |

**[Table 13]**

| | Example 61 | Example 62 | Example 63 | Example 64 | Example 65 | Example 66 | Example 67 | Comparative Example 1 | Comparative Example 2 |
|---|---|---|---|---|---|---|---|---|---|
| Glass | No. 49 | No. 50 | No. 51 | No. 52 | No. 53 | No. 54 | No. 55 | No. 1 | No. 56 |
| Thickness t [µm] | 600 | 600 | 600 | 600 | 600 | 600 | 600 | 500 | 600 |
| Heat treatment conditions | 570°C for 12 hours | 570°C for 12 hours | 570°C for 12 hours | 570°C for 12 hours | 570°C for 12 hours | 570°C for 12 hours | 570°C for 12 hours | 615°C for 12 hours | No |
| | →720°C for 3 hours | →720°C for 3 hours | →720°C for 3 hours | →720°C for 3 hours | →720°C for 3 hours | →720°C for 3 hours | →720°C for 3 hours | →850°C for 3 hours | |
| Precipitated crystal | Not measured | Not measured | Not measured | Not measured | Not measured | Not measured | Not measured | Lithium disilicate, trilithium phosphate | No |
| XRD full width at half maximum FWHM at maximum peak [°] | Not measured | Not measured | Not measured | Not measured | Not measured | Not measured | Not measured | 0.118 | No |
| Transmittance at 400 nm [%] | Not measured | Not measured | Not measured | Not measured | Not measured | Not measured | Not measured | 72.5 % | 91.9% |
| Chemical tempering condition | Not measured | Not measured | Not measured | Not measured | Not measured | Not measured | Not measured | KNO₃, 450°C for 168 hours | NaNO₃, 430°C for 2 hours |
| Surface compression stress [MPa] | Not measured | Not measured | Not measured | Not measured | Not measured | Not measured | Not measured | 423 | 211 |
| Compression stress layer depth DOC [µm] | Not measured | Not measured | Not measured | Not measured | Not measured | Not measured | Not measured | 50 | 112 |
| DOC/t [%] | Not measured | Not measured | Not measured | Not measured | Not measured | Not measured | Not measured | 10.0% | 18.6% |
| Central tensile stress [MPa] | Not measured | Not measured | Not measured | Not measured | Not measured | Not measured | Not measured | Not measured | 74 |
| P180 scratch strength [MPa] | Not measured | Not measured | Not measured | Not measured | Not measured | Not measured | Not measured | Not measured | 239 |

The main crystal was evaluated by powder X-ray diffraction using an X-ray diffraction apparatus (Aeris, manufactured by Malvern Panalytical Ltd). Note that, the measurement range was 2θ = 10° to 60°. The background and amorphous portion (halo peak) were removed from the obtained X-ray diffraction spectrum, and peak fitting was performed on the peak with the maximum intensity to derive the full width at half maximum FWHM.

The transmittance is a linear transmittance measured in the sheet thickness direction using a spectrophotometer (UV-3100 manufactured by Shimadzu Corporation).

Next, each glass sheet was subjected to an ion exchange treatment under the conditions listed in the tables to form a compression stress layer on the surface, thereby obtaining Examples 1 to 67 and Comparative Examples 1 and 2.

The compression stress value and the stress depth are measured using a scattered light photoelastic stress meter SLP-2000 or a surface stress meter FSM-6000LE manufactured by Orihara industrial co., ltd. In the measurement, in Examples 1 to 67 and Comparative Example 1, a photoelastic constant was 27.0 and a refractive index was 1.55, and in Comparative Example 2, the photoelastic constant was 30.5 and the refractive index was 1.51.

For the scratch strength, first P180 sandpaper was placed on the sample, and the sample was pressed with an iron indenter having a tip with a diameter of 9 mm for 1 second at a load of 100 N, to scratch the sample. Thereafter, a three-point bending test was performed on the scratched part of the sample which was unloaded and taken out, and the stress at break was defined as the scratch strength.

As is clear from Tables 7 to 13, it is considered that, in Examples 1 to 67, high strength, a high transmittance, and high impact resistance are obtained. On the other hand, it is considered that, in Comparative Example 1, since ion exchange is performed using a KNO₃ molten salt, the stress depth (DOC) is small, and since a portion where the Na ion concentration decreases from the surface side toward the inner side of the glass is not included, the impact resistance is not sufficiently high. It is considered that, in Comparative Example 2, since the crystallization does not occur, the strength is not sufficiently high.

Further, an X-ray diffraction spectrum of the crystallized glass of Example 52 in Table 12 is shown in Fig.1. As is clear from Fig.1, in Example 52, since lithium disilicate is precipitated and petalite is not precipitated, the compression stress value of the compression stress layer is large.

## Claims

1. A crystallized glass comprising:
a compression stress layer formed by ion exchange, wherein
the crystallized glass comprises, as a composition, in mol%, from 50% to 80% of SiO₂, from 0% to 4.8% of Al₂O₃, from 0.2% to 15% of P₂O₅, from 1.5% to 30% of Li₂O, from 0% to 15% of Na₂O, and from 1.5% to 10% of ZrO₂, and
the crystallized glass has a portion where a Na ion concentration decreases from a surface side to an inner side of the glass.

2. The crystallized glass according to claim 1, wherein the crystallized glass has a sheet shape, and a stress depth of the compression stress layer is 13% or more of a sheet thickness.

3. The crystallized glass according to claim 1 or 2, wherein at least one of lithium disilicate and lithium metasilicate is precipitated.

4. The crystallized glass according to claim 1 or 2, wherein a full width at half maximum FWHM at a maximum peak in an X-ray diffraction spectrum is 0.120° or more.

5. The crystallized glass according to claim 1 or 2, wherein a compression stress value of the compression stress layer is 100 MPa or more.

6. The crystallized glass according to claim 1 or 2, wherein the crystallized glass has a sheet shape and a sheet thickness of 1.5 mm or less.

7. A crystallized glass comprising:
a compression stress layer formed by ion exchange, wherein
at least one of lithium disilicate and lithium metasilicate is precipitated, and
the crystallized glass has a portion where a Na ion concentration decreases from a surface side to an inner side of the glass.

8. A crystallized glass comprising:
a compression stress layer formed by ion exchange, wherein
the crystallized glass comprises, as a composition, in mol%, from 50% to 80% of SiO₂, from 0% to 4.8% of Al₂O₃, from 0.2% to 15% of P₂O₅, from 1.5% to 30% of Li₂O, from 0% to less than 3.8% of Na₂O+K₂O, from 0% to less than 3.8% of Na₂O, from 0% to less than 3.8% of K₂O, and from 1.5% to 10% of ZrO₂.

9. A crystalline glass comprising, as a glass composition, in mol%, from 50% to 80% of SiO₂, from 0% to 4.8% of Al₂O₃, from 0.2% to 15% of P₂O₅, from 1.5% to 30% of Li₂O, from 0% to less than 3.8% of Na₂O+K₂O, from 0% to less than 3.8% of Na₂O, from 0% to less than 3.8% of K₂O, and from 1.5% to 10% of ZrO₂.

10. A crystalline glass comprising, as a glass composition, in mol%, from 50% to 80% of SiO₂, from 0% to 4.8% of Al₂O₃, from 0.2% to 15% of P₂O₅, from 1.5% to 30% of Li₂O, from 0% to 15% of Na₂O, and from 1.5% to 10% of ZrO₂.
